# EUROPEAN PATENT APPLICATION

(11) **EP 4 478 274 A1**
(43) Date of publication of application: **18.12.2024**
(21) Application number: 22926194.6
(22) Date of filing: 22.11.2022
(51) Int. Cl.: G06Q 30/06, G06Q 30/02, G06Q 30/08, H04W 4/02, G06Q 20/10

(54) **INTEGRATED MEDIATION AND MANAGEMENT PLATFORM SYSTEM FOR MOBILE VIDEO ADVERTISEMENT, ELECTRONIC TRANSACTIONS, AND PHONE COMMUNICATION**

(30) Priority: 10.02.2022 KR 20220017515
(71) Applicant: Bang, Kwan Soo, Seoul 08751 (KR); Bang, Nu Ri, Seoul 08751 (KR)
(72) Inventor: Bang, Kwan Soo, Seoul 08751 (KR); Bang, Nu Ri, Seoul 08751 (KR)
(74) Representative: Valet Patent Services Limited
(86) International application number: PCT/KR2022/018525
(87) International publication number: WO 2023/153596

(57) **Abstract**

The present disclosure relates to an integrated intermediary management platform system for mobile video advertisements, electronic commerce and telephone communication.

As an instance, disclosed is a system. The system includes: an advertisement push management unit which establishes telephone communication between a member communication terminal and a receiver communication terminal when the member communication terminal refuses to receive an advertisement video provided when telephone communication to the receiver communication terminal is attempted, and pushes the advertisement video to the member communication terminal when reception of the advertisement video is approved; an advertisement management unit which generates an electronic code according to the advertisement video, stores and manages the electronic code, filter the advertisement video on the basis of current position information of the member communication terminal, and transmits the filtered advertisement video and the corresponding electronic code to the advertisement push management unit; a server data management unit which pays tokens to a token account of a member as a reward for reception of the advertisement video pushed to the member communication terminal, maintains balance between the token account and a bank account, and performs settlement processing by using the bank account of the member when electronic commerce is conducted; and an electronic commerce intermediary management unit which conducts bidding on a corresponding commodity by taking a plurality of commodity manufacturers as targets when an individual purchases the commodity related to the advertisement video and a plurality of members request a specific commodity, and performs intermediary management on electronic commerce for the joint purchase between a commodity manufacturer which has won the bid and the corresponding member.

## Description

### TECHNICAL FIELD

Examples of the present disclosure relates to an integrated intermediary management platform system for mobile video advertisements, electronic commerce and telephone communication.

### BACKGROUND

Most of existing online electronic commerce methods are B2C (business-to-consumer transaction) consumption patterns by means of large-scale distribution enterprise online platforms or personal shopping websites. Recently, the influence of well-known influencers is increasing by means of social network sites (SNS), etc. As professional enthusiasts in various fields continue to emerge, they are leading C2C (consumer-to-consumer transaction) consumption that introduces and sells products through joint purchase.

However, the current electronic commerce mode is not centered on consumers or producers, but is carried out in a way by which platform enterprises or influencers select commodities and determine discount prices according to their own interests, thus occupying the position of the largest beneficiary, which leads to the distortion of the market order, especially small and medium-sized manufacturers who encounter a lot of difficulties because excessive discounts are demanded.

As far as the commercial advertising mode in the current market is concerned, digital advertisements based on the Internet and mobile communication terminals occupy most of the total advertising market, and large platform enterprises monopolize this digital advertising market, thus falling into the advertising monopoly whirlpool. Moreover, the advertising mode for the consumers is to push advertisements to unspecified majority people in turn by means of digital advertisements, the Internet, wired/wireless TV, mobile communication terminals, SNS, other video media, newspapers, magazines and other printed materials. Therefore, it is impossible to accurately calculate the effect of advertising expenses, and it is difficult to determine the rationality of the advertising expenses.

In addition, due to uncertainty of the advertising effect and the cost, especially small businesses and small and medium-sized enterprises in small and medium-sized cities in local areas (referring to non-capital areas), it is difficult to advertise in the original way, and there is no selective advertisement video system for realizing direct one-to-one mode between the consumers and advertisers by means of the mobile communication terminals to solve this problem.

Additionally, there is no electronic commerce system in which the consumers and the producers directly lead and implement two-way joint purchase/subscription electronic bidding, and there is no actual consumer-centered advertising system in which the advertisers provide one-to-one selective video advertisements to the consumers and pay predetermined advertising fees to the consumers who receive advertisements. The advertisements that consumers do not want to see are pushed without difference, such that there are problems and defects that advertising effectiveness is unclear and inconvenience may be caused to the consumers.

As a prior art related to the present disclosure, there is a patent with the Publication No. 10-2003-0028339 (publication date: April 8, 2003).

### SUMMARY

### Technical problems

An example of the present disclosure provides an integrated intermediary management platform system for mobile video advertisements, electronic commerce and telephone communication, which serves as a solution for solving the above problems by using artificial intelligence, blockchains, cloud, big data, information and communication technologies (ICT) and building a new market order, which provides intermediary services of one-to-one selective video advertisements and telephone communication between consumers and producers by means of a mobile communication terminal, and utilizes direct transactions between actual consumers and producers, i.e. consumer to producer to consumer (C2P2C) to provide the electronic commerce solution in which the biggest beneficiaries of electronic commerce and digital advertising consumption are transformed from intermediate distributors and platform businesses to consumers and producers.

### Technical solutions

The integrated intermediary management platform system for mobile video advertisements, electronic commerce and telephone communication system in an example of the present disclosure includes: an advertisement push management unit which establishes telephone communication between a member communication terminal and a receiver communication terminal when the member communication terminal refuses to receive an advertisement video provided when telephone communication to the receiver communication terminal is attempted, and pushes the advertisement video to the member communication terminal when reception of the advertisement video is approved; an advertisement management unit which receives advertisement video registration from an advertiser communication terminal, generates an electronic code according to the registered advertisement video, stores and manages the electronic code together with the advertisement video, filters the advertisement video on the basis of current position information of the member communication terminal, and transmits the filtered advertisement video and the corresponding electronic code to the advertisement push management unit; a server data management unit which pays tokens to a token account of a member as a reward for reception of the advertisement video pushed to the member communication terminal, maintains balance between the token account and a bank account in conjunction with the bank account of the member, and performs settlement processing by using the bank account of the member when electronic commerce is conducted; and an electronic commerce intermediary management unit which conducts bidding on a corresponding commodity by taking a plurality of commodity manufacturers as targets when an individual purchases the commodity related to the advertisement video and a plurality of members request a specific commodity, and performs intermediary management on electronic commerce for the joint purchase between a commodity manufacturer which has won the bid and the corresponding member.

In addition, the advertisement push management unit may include: a telephone communication reception control unit which transmits a message for confirming whether or not to receive an advertisement to the member communication terminal when input of a telephone number of the receiver communication terminal is confirmed in the member communication terminal, performs control so as to make the receiver communication terminal be connected to telephone communication when the advertisement video is rejected to be received by means of the message, and temporarily determines to place the advertisement when the advertisement video is approved to be received or whether reception is to be approved is not determined within preset time; an advertisement placement final determination unit which obtains Internet communication environment information of the member communication terminal from the member communication terminal when placement of the advertisement is temporarily determined, interrupts the placement of the advertisement when the placement of the advertisement is in a fee-based Internet communication environment, and finally determines the placement of the advertisement when the placement of the advertisement is in a free Internet communication environment; a communication terminal position analysis unit which obtains current position information of the member communication terminal from the member communication terminal and transmits the obtained current position information to the advertisement management unit; and an advertisement video and electronic code pushing unit which receives, from the advertisement management unit, transmission of the advertisement video and the electronic code on the basis of the current position information of the member communication terminal, pushes the received advertisement video to the member communication terminal, and pushes the received electronic code to the server data management unit.

Additionally, the advertisement management unit may include: an advertisement acceptance unit which accepts the advertisement video and advertiser information from the advertiser communication terminal and charges an advertisement fee determined based on components of the advertisement video; an advertisement analysis and evaluation unit which performs data analysis on the advertisement video accepted by the advertisement acceptance unit to determine the advertisement fee based on the components of the advertisement video, and classify advertisement video categories, advertisement time, and advertisement areas by using artificial intelligence and big data technologies; an advertisement video and electronic code management unit which calculates a total number of advertisement pushing times and a token issuing number for the advertisement video classified by the advertisement analysis and evaluation unit, generates an advertisement video electronic code for pushing the advertisement video and a token electronic code for issuing tokens according to the total number of advertisement pushing times, stores the advertisement video electronic code and the token electronic code together with the advertisement video as package information, assigns a unique serial number, and performs storage and management; and a pushed advertisement analysis unit which pushes an advertisement extraction signal including the unique serial number to the advertisement video and electronic code management unit in conjunction with the advertisement analysis and evaluation unit when the communication terminal position analysis unit receives the current position information, extracts the advertisement video matching the corresponding current position information and an advertisement region, and the advertisement video electronic code and token electronic code that match the corresponding advertisement video from the advertisement video and electronic code management unit, and transmit the package information composed of the extracted advertisement video, advertisement video electronic code, and token electronic code to the advertisement video and electronic code pushing unit.

In addition, the advertisement video and electronic code management unit may include: an advertisement video storage unit which makes the advertisement video classified by the advertisement analysis and evaluation unit match the advertisement video electronic code and the token electronic code, and performs storage in a mutual linking manner; and an electronic code generation management unit which calculates the total number of advertisement pushing times and the number of tokens issued for the advertisement video by a method for calculating advertisement fees/token unit prices paid by the advertiser for the advertisement video, stores the advertisement video electronic code, the token electronic code and the unique serial number, extracts the advertisement video consistent with the unique serial number and the advertisement video electronic code and the token electronic code matching the corresponding advertisement video respectively from the advertisement video storage unit if the advertisement extraction signal is received, transmits the extracted package information to the advertisement video and electronic code pushing unit, then deletes respective storage space of the extracted advertisement video, advertisement video electronic code and token electronic code, and counts the remaining advertisement videos, the advertisement video electronic codes and the token electronic codes.

Additionally, the server data management unit may include: a token account management unit which receives the token electronic code from the advertisement video and electronic code pushing unit and deposits the tokens into the token account of the member, deposits a reward corresponding to the tokens deposited into the token account of the member into the bank account of the member on the basis the advertisement fee charged by the advertisement acceptance unit, and maintains balance between the bank account of the member and the token account of the member; a token transaction unit which executes token settlement corresponding to an individual purchase and a joint purchase made by means of the electronic commerce intermediary management unit on the basis of the tokens deposited in the token account of the member; and a server management unit which provides and manages usage information capable of using the tokens deposited in the token account of the member, stores and manages data generated in respective processes in conjunction with a cloud system, and manages system operation, maintenance, and update.

In addition, the electronic commerce intermediary management unit may include: an individual transaction management unit which provides commodity information related to the advertisement video and provides an electronic commerce intermediary service for purchasing a commodity individually for each member; and a joint transaction management unit which receives a joint purchase request for a specific commodity from a plurality of members, collects a plurality of members who are to perform joint purchase, conducts bidding on the commodity as a target of the joint purchase with a plurality of commodity manufacturers as targets, and provides an electronic commerce intermediary service for the joint purchase between the commodity manufacturer which has won the bid and the corresponding member.

In addition, the individual transaction management unit may include: a commodity detailed information providing unit which provides commodity detailed information in conjunction with the advertisement video provided for the member communication terminal; a commodity purchase determination unit which confirms whether or not to purchase the commodity from the member communication terminal on the basis of the commodity detailed information, performs control to connect telephone communication to the receiver communication terminal based on the telephone number input to the member communication terminal when there is no commodity purchase intention, and performs a commodity purchase procedure when there is a commodity purchase intention; an individual purchase payment settlement unit which transfers payment corresponding to the commodity purchase procedure performed by the commodity purchase determination unit from the bank account of the member and generates commodity transaction details; a commodity purchase processing unit which checks the commodity transaction details with financial transaction details confirmed from the bank account of the member, and requests the commodity manufacturer to deliver a commodity settled by the member if there is no abnormality in the check result; and a call state control unit which confirms whether there is an intention to call the member communication terminal after the commodity delivery request is completed, and performs control to connect the telephone communication to the receiver communication terminal or terminate the call function according to the confirmation result.

Additionally, the joint transaction management unit may include: a joint purchase acceptance unit which registers commodity information to be jointly traded from the member communication terminal and the commodity manufacturer, accepts a joint purchase application, publicizes the accepted commodity information and preset joint purchase conditions within a preset publicity period, collects a plurality of members and commodity manufacturers to perform joint purchase, determines bids to the plurality of commodity manufacturers on the basis of the joint purchase conditions if the joint purchase condition are satisfied within the corresponding publicity period, and cancels the joint purchase offer if the joint purchase conditions are not satisfied; a joint purchase introduction unit which introduces the joint purchase conditions to a plurality of commodity manufacturers after the joint purchase acceptance unit determines the bid, where the joint purchase conditions include the number of joint purchase participants, commodity information, commodity transaction quantity, commodity reservation unit price, commodity quality standard, commodity delivery schedule, commodity settlement method, purchase quantity in each region, and bidding schedule; a bid participation registration unit which registers and accepts bid registration materials from at least one commodity manufacturer that has confirmed the joint purchase conditions introduced by the joint purchase introduction unit; a joint purchase selection unit which provides the bid registration materials accepted by the bid participation registration unit for the member communication terminal participating in the joint purchase, and selects the commodity manufacturer to deliver the jointly purchased commodity by a voting method of the member communication terminal; a joint purchase contract signing unit which signs an electronic contract between the member participating in the joint purchase and the selected commodity manufacturer to form a community between the member and the commodity manufacturer and provide commodity production and delivery progress information; and a joint purchase payment settlement unit which processes payment settlement in conjunction with the bank account of the member on the basis of the electronic contract signed by the joint purchase contract signing unit.

### Effects of invention:

According to the present disclosure, the integrated intermediary management platform system for mobile video advertisements, electronic commerce and telephone communication may be provided, which serves as a solution for solving the above problems by using artificial intelligence, blockchains, cloud, big data, information and communication technologies (ICT) and building a new market order, which provides intermediary services of one-to-one selective video advertisements and telephone communication between consumers and producers by means of a mobile communication terminal, and utilizes direct transactions between actual consumers and producers, i.e. consumer to producer to consumer (C2P2C) to provide the electronic commerce solution in which the biggest beneficiaries of electronic commerce and digital advertising consumption are transformed from intermediate distributors and platform businesses to consumers and producers.

Moreover, the form of non-differential repeated push advertisement into an one-to-one selective advertisement between advertisers and the consumers, and a fixed advertising fee is paid to the consumers who receive the advertisement, so as to improve an advertising effect and consumer rights, simplify a commodity circulation structure to reduce freight volume, and further reduce energy consumption and carbon and environmental pollutant emissions caused by transportation vehicles. By means of direct transactions between actual purchasers and producers, the producers can confirm the quantity of commodities actually sold, thus minimizing raw materials and commodity stocks and reducing the number of commodities scrapped due to expiration dates, minimizing the cost of raw materials and production/storage/management/transportation and scrap, and reducing the production cost. By means of C2P2C direct transactions between the consumers and the producers, the market order distortion can be alleviated, and rights and interests of the consumers and the producers can be enhanced.

In addition, various effects that are captured directly or indirectly by means of this document can be provided.

### BRIEF DESCRIPTION OF THE DRAWINGS

FIG. 1 shows a schematic diagram of integral composition of an integrated intermediary management platform system for mobile video advertisements, electronic commerce and telephone communication in an example of the present disclosure.
FIG. 2 shows a block diagram of integral composition of an integrated intermediary management platform system for mobile video advertisements, electronic commerce and telephone communication in an example of the present disclosure.
FIG. 3 shows a block diagram of composition of an advertisement push management unit and a server data management unit in an example of the present disclosure.
FIG. 4 shows a block diagram of composition of an advertisement management unit in an example of the present disclosure.
FIG. 5 shows a block diagram of composition of an individual transaction management unit in an electronic commerce intermediary management unit in an example of the present disclosure.
FIG. 6 shows a block diagram of composition of a joint transaction management unit in an electronic commerce intermediary management unit in an example of the present disclosure.

### DETAILED DESCRIPTIONS OF THE EMBODIMENTS

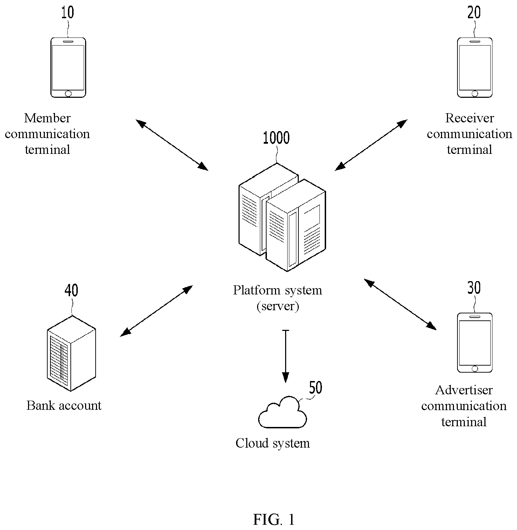

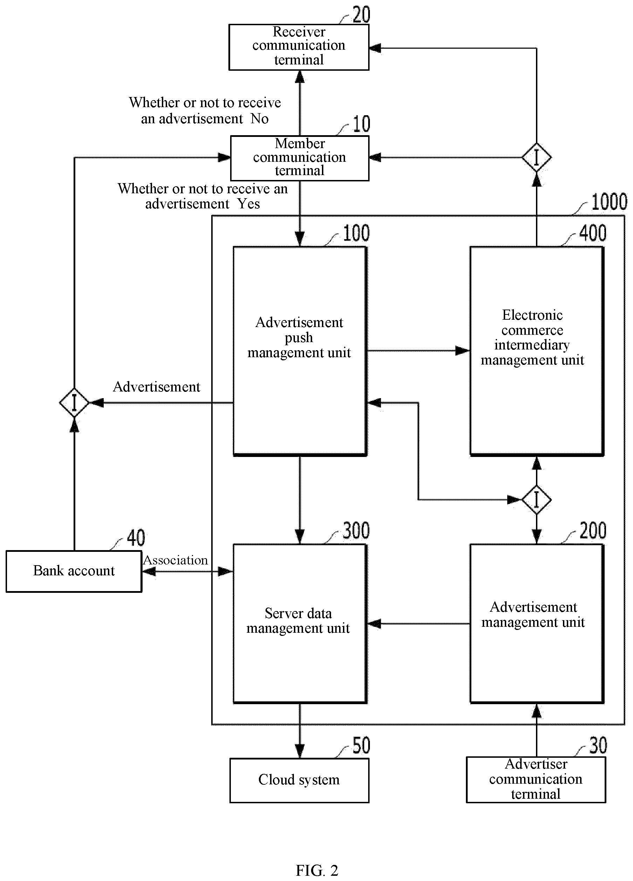

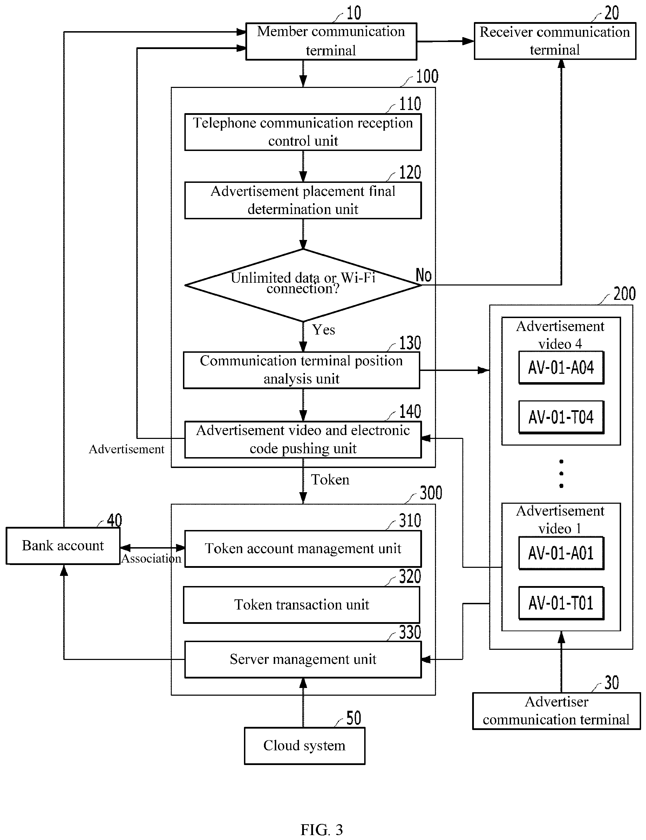

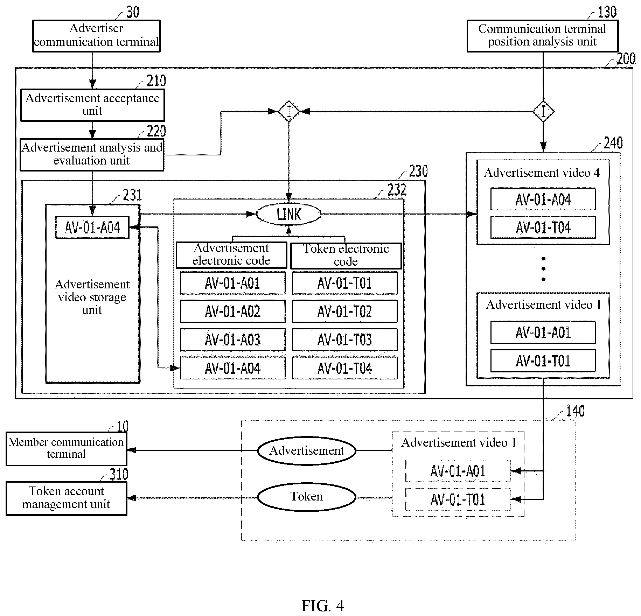

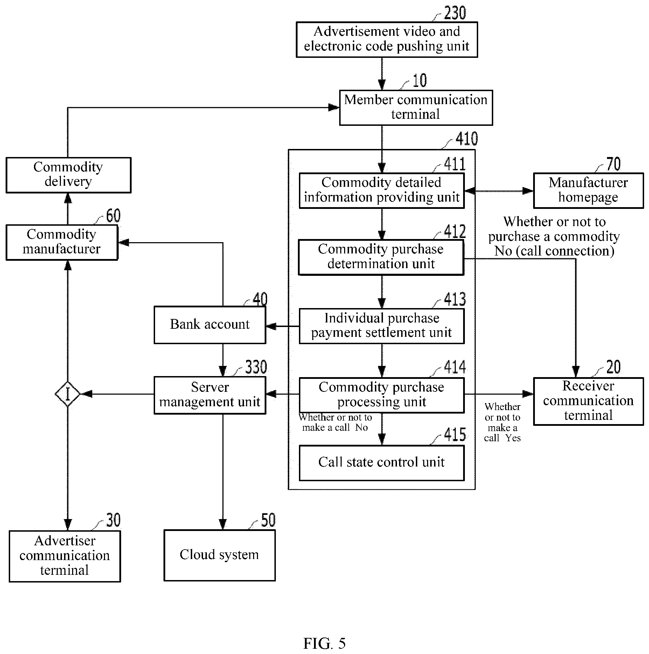

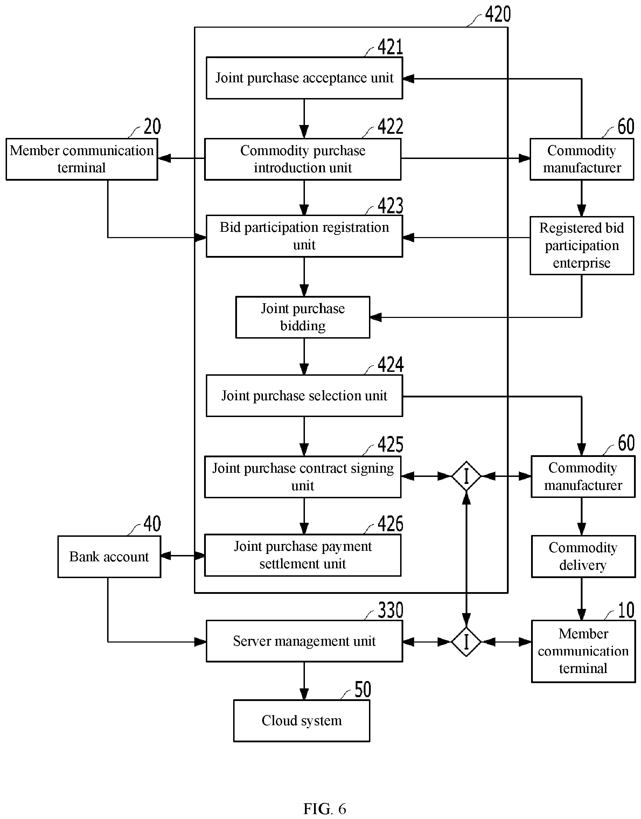

FIG. 1 shows a schematic diagram of integral composition of an integrated intermediary management platform system for mobile video advertisements, electronic commerce and telephone communication in an example of the present disclosure, FIG. 2 shows a block diagram of integral composition of the integrated intermediary management platform system for mobile video advertisements, electronic commerce and telephone communication in the example of the present disclosure, and FIG. 3 shows a block diagram of composition of an advertisement push management unit and a server data management unit in the example of the present disclosure. FIG. 4 shows a block diagram of composition of an advertisement management unit in the example of the present disclosure, FIG. 5 shows a block diagram of composition of an individual transaction management unit in an electronic commerce intermediary management unit in the example of the present disclosure, and FIG. 6 shows a block diagram of composition of a joint transaction management unit in the electronic commerce intermediary management unit in the example of the present disclosure.

Referring to FIGS. 1 and 2, the integrated intermediary management platform system 1000 for mobile video advertisements, electronic commerce and telephone communication according to the example of the present disclosure may include at least one of an advertisement push management unit 100, an advertisement management unit 200, a server data management unit 300, and an electronic commerce intermediary management unit 400.

The advertisement push management unit 100 may establish telephone communication between a member communication terminal 10 and a receiver communication terminal 20 when the member communication terminal 10 refuses to receive an advertisement video provided when telephone communication to the receiver communication terminal 20 is attempted, and push the advertisement video to the member communication terminal 10 when reception of the advertisement video is approved.

For this purpose, as shown in FIG. 3, the advertisement push management unit 100 may include at least one of a telephone communication reception control unit 110, an advertisement placement final determination unit 120, a communication terminal position analysis unit 130, and an advertisement video and electronic code pushing unit 140.

The telephone communication reception control unit 110 transmits a message for confirming whether or not to receive an advertisement to the member communication terminal 10 when input of a telephone number of the receiver communication terminal 20 is confirmed in the member communication terminal 10, performs control so as to make the receiver communication terminal 20 be connected to telephone communication when the advertisement video is rejected by a member to be received by means of the transmitted message, and temporarily determines to place the advertisement when the advertisement video is approved by the member to be received or whether reception is to be approved is not determined within preset time.

More specifically, for the telephone communication reception control unit 110, if the telephone number of the receiver communication terminal 20 is input to the member communication terminal 10 registered as the member for telephone communication and the corresponding telephone number is received, a short message inquiring whether or not to receive an advertisement is transmitted to the member communication terminal while the telephone communication reception control unit 110 is automatically accessed so as to enable whether or not to receive the advertisement to be determined. In this case, if the member refuses to receive the advertisement, a calling mode may be activated to connect telephone communication to the receiver communication terminal 20 to realize telephone communication between the member communication terminal 10 and the receiver communication terminal 20, and if the member agrees to receive the advertisement or does not determine whether to receive the advertisement within several seconds, a flow for transmitting the advertisement to the member communication terminal 10 may be performed, which is defined as temporarily determining to place the advertisement.

The advertisement placement final determination unit 120 may obtain Internet communication environment information of the member communication terminal from the member communication terminal 10 when placement of the advertisement is temporarily determined, confirm the obtained Internet communication environment information, then interrupt the placement of the advertisement immediately when the placement of the advertisement is confirmed to be in a fee-based Internet communication environment, and finally determine the placement of the advertisement when the placement of the advertisement is in a free Internet communication environment. When the placement of the advertisement is finally determined, such a case may be informed to the communication terminal position analysis unit 130.

More specifically, the advertisement placement final determination unit 120 may confirm whether or not the member communication terminal 10 participates in an unlimited data use service and is connected to Wi-Fi on the basis of the Internet communication environment information of the member communication terminal 10 to finally determine whether or not to place the advertisement. As described above, when the member communication terminal 10 does not participate in the unlimited data use service or is not connected to free Internet communication such as the Wi-Fi, the member may be made not to bear the cost of viewing the advertisement video, and when the member communication terminal is connected to a free Internet environment or participates in the unlimited data use service, the advertisement can be finally determined to be placed. In this case, when the member communication terminal 10 is in an Internet payment environment, after the member communication terminal 10 is notified that the Internet environment is not free and the placement of the advertisement is immediately interrupted, a telephone call signal is transmitted to the receiver communication terminal 20, such that telephone communication between the member and a receiver can be realized, and the member communication terminal 10 does not incur additional charges for receiving and viewing the advertisement.

The communication terminal position analysis unit 130 may obtain current position information of the member communication 10 from the member communication terminal 10 and transmit the obtained current position information to the advertisement management unit 200, such that the advertisement management unit 200 may perform preparation so as to push the advertisement video suitable for the current position information of the member communication terminal 10.

The advertisement video and electronic code pushing unit 140 may receive, from the advertisement management unit 200, the advertisement video and the electronic code on the basis of the current position information of the member communication terminal 10, push the received advertisement video to the member communication terminal 10, and push the received electronic code to the server data management unit 300.

The advertisement management unit 200 may receive advertisement video registration from an advertiser communication terminal 30, generate an electronic code according to the registered advertisement video, store and manage the electronic code together with the advertisement video, filter the advertisement video on the basis of current position information of the member communication terminal 10 received from the communication terminal position analysis unit 130, and transmit the filtered advertisement video and the corresponding electronic code to the advertisement push management unit 100.

For this purpose, as shown in FIG. 4, the advertisement management unit 200 may include at least one of an advertisement acceptance unit 210, an advertisement analysis and evaluation unit 220, an advertisement video and electronic code management unit 230 and a pushed advertisement analysis unit 240.

The advertisement acceptance unit 210 may accept the advertisement video and advertiser information from the advertiser communication terminal 30 and charges an advertisement fee determined based on components of the advertisement video.

More specifically, the advertisement acceptance unit 210 may accept the advertisement video after confirming the identity of an advertiser if the advertiser entrusts the advertisement by means of the advertiser communication terminal 30, and charge an advertisement fee determined based on the components of the advertisement video. In this case, the charged advertisement fee may be deposited into a bank account 40 by means of a server management unit 330 in the server data management unit 300, or collate and transmit data of the accepted advertisement video to the advertisement analysis and evaluation unit 220.

The advertisement analysis and evaluation unit 220 may perform data analysis on the advertisement video accepted by the advertisement acceptance unit 210 to determine the advertisement fee based on the components of the advertisement video, and classify a category of the advertisement video, advertisement time, and an advertisement area by using artificial intelligence and big data technologies.

More specifically, the advertisement analysis and evaluation unit 220 determines whether or not the advertisement video complies with relevant regulations by using the artificial intelligence technology and performs correction while performing data analysis on the advertisement video transmitted from the advertisement acceptance unit 200, and classifies the advertisement video in detail according to the characteristics of each advertisement by using the total advertisement fee, advertisement category, advertisement time, advertisement area, etc., thereby establishing an advertisement management system. An advertisement video file thus analyzed and classified may be transmitted to the advertisement video and electronic code management unit 230.

The advertisement video and electronic code management unit 230 may calculate a total number of advertisement pushing times and a token issuing number for the advertisement video classified by the advertisement analysis and evaluation unit 220, generate an advertisement video electronic code for pushing the advertisement video and a token electronic code for issuing tokens according to the total number of advertisement pushing times, store the advertisement video electronic code and the token electronic code together with the advertisement video as package information, assign a unique serial number, and perform storage and management.

As shown in FIG. 4, the advertisement video and electronic code management unit 230 may include at least one of an advertisement video storage unit 231 and an electronic code generation management unit 232.

The advertisement video storage unit 231 may make the advertisement video classified by the advertisement analysis and evaluation unit 220 match the advertisement video electronic code and the token electronic code, and perform storage in a mutual linking manner.

More specifically, the advertisement video storage unit 231 may store the advertisement video file received from the advertisement analysis and evaluation unit 220, and may store the advertisement video file by using the electronic code (advertisement video electronic code and token electronic code) assigned by the electronic code generation management unit 232 when storing the advertisement video file.

More specifically, a computer code file may be managed in the manner by which the advertisement video file matches the advertisement video electronic code and the token electronic code of the electronic code generation management unit 232, and each electronic code and advertisement video are linked to each other and run. When an advertisement extraction signal combining the advertisement video electronic code and the token electronic code as a pair is received from the electronic code generation management unit 232, an advertisement video file linked to the corresponding electronic code may be copied and transmitted to the electronic code generation management unit 232. In addition, the number of copied and pushed advertisement video files may be counted and automatically filled in the last digit of a computer code. If the number filled in is consistent with the last unique serial number of a pair of advertisement video electronic code and token electronic code existing in the file linked to the electronic code generation management unit 232 and pushed, the corresponding advertisement video file, advertisement video electronic code and token electronic code may be lost from respective storage space and automatically deleted.

The electronic code generation management unit 232 calculates the total number of advertisement pushing times and the number of tokens issued for the advertisement video by a method for calculating advertisement fees/token unit prices paid by the advertiser for the advertisement video, generates the advertisement video electronic code, the token electronic code and the unique serial number and then performs storage, extracts the advertisement video consistent with the unique serial number and the advertisement video electronic code and the token electronic code matching the corresponding advertisement video respectively from the advertisement video storage unit 231 if the advertisement extraction signal is received, packages the extracted data, transmits the corresponding package information to the advertisement video and electronic code pushing unit 140, then deletes respective storage space of the extracted advertisement video, advertisement video electronic code and token electronic code, and counts the remaining advertisement videos, the advertisement video electronic codes and the token electronic codes.

More specifically, the electronic code generation management unit 232 may calculate the total number of advertisement pushing times and the number of token generated (issued) for the advertisement video transmitted from the advertisement analysis and evaluation unit 220, and calculate (total advertisement commission fee = token unit price = number of advertisement pushing times and number of tokens generated (issued)), generate an advertisement video electronic code and a token electronic code corresponding to the number, and assign same serial numbers respectively. The same unique serial numbers may be arranged in parallel and combined into a pair for storage management. The computer code thus organized and the advertisement video file stored in the advertisement video storage unit 231 are assigned the same computer code system, and are managed so as to maintain a linked state. In addition, if an advertisement extraction request signal is received from the pushed advertisement analysis unit 240, a pair of advertisement video electronic code and token electronic code are extracted from the corresponding storage space, and then if the signal is transmitted to the advertisement video storage unit 231 again, an advertisement video file linked to the corresponding electronic codes may be copied, generated into a packet with the corresponding electronic codes, and transmitted to the pushed advertisement analysis unit 240.

The pushed advertisement analysis unit 240 may push the advertisement extraction signal including the unique serial number to the advertisement video and electronic code management unit 230 in conjunction with the advertisement analysis and evaluation unit 220 when the current position information of the member communication terminal 10 is received by means of the communication terminal position analysis unit 130, extract the advertisement video matching the corresponding current position information and an advertisement region, and the advertisement video electronic code and token electronic code that match the corresponding advertisement video from the advertisement video and electronic code management unit 230, and transmit the package information composed of the extracted advertisement video, advertisement video electronic code, and token electronic code to the advertisement video and electronic code pushing unit 140.

More specifically, the pushed advertisement analysis unit 240 may cooperate with the advertisement analysis and evaluation unit 220 to find an advertisement video most suitable for the current position of the member communication terminal 10, and may group a copy video copied from the original advertisement video, the advertisement video electronic code, and the token electronic code into a package and push the package to the advertisement video and electronic code pushing unit 140. In this case, the advertisement video and electronic code pushing unit 140 divides the received advertisement package information, pushes the advertisement video and the advertisement video electronic code to the member communication terminal 10, such that the member can view the advertisement. After the advertisement video is received, the advertisement video electronic code is automatically lost, and a telephone call signal is transmitted to the receiver communication terminal 20, such that a telephone call can be realized. In addition, the separated token computer code is transmitted to a token account management unit 310 so as to be capable of being deposited into a token account 50 of the member existing in the token account management unit 310.

The server data management unit 300 may pay tokens to the token account of the member as a reward for reception of the advertisement video pushed to the member communication terminal 10, maintain and manage balance between the token account and a bank account in conjunction with the bank account 40 of the member, and perform settlement processing by linking the token account to the bank account 40 of the member when electronic commerce is conducted.

For this purpose, as shown in FIG. 3, the server data management unit 300 may include at least one of the token account management unit 310, a token transaction unit 320 and the server management unit 330.

The token account management unit 310 may receive the token electronic code from the advertisement video and electronic code pushing unit 140, deposit tokens into the token account of the corresponding member in the token account management unit 310, deposit a reward corresponding to the tokens deposited into the token account of the corresponding member into the bank account 40 of the member on the basis the advertisement fee charged by the advertisement acceptance unit 210, and maintain balance between the bank account 40 and the token account of the member.

More specifically, the token account management unit 310 may deposit and manage the tokens received from the advertisement video and electronic code pushing unit 140 by means of the token electronic code, charge an amount corresponding to tokens deposited into the token account of the member among advertisement fees charged by the advertisement acceptance unit 210, and after transferring and depositing the tokens into the bank account 40, and manage the tokens in association with the token account of the corresponding member so as to maintain balance between the accounts, thereby preserving the bank account 40 of the member.

The token transaction unit 320 may execute token settlement corresponding to an individual purchase and a joint purchase made by means of the electronic commerce intermediary management unit 400 on the basis of the tokens deposited in the token account in the token account management unit 310.

More specifically, the token transaction unit 320 enables consumer to consumer (C2C) and consumer to business (C2B) transactions to be freely performed by using the tokens deposited in the token account in the token account management unit 310 and perform realization at any time, performs transactions with affiliated stores, enterprises, and public organizations that can use tokens, performs management on payment of goods, and masters and checks whether or not there is balance between the token accounts associated with the token account management unit 310. Additionally, the token transaction unit 320 has a function of accounting cash in the bank account 40 of the corresponding member on the basis of token transaction data of the member and remitting the cash to/from the bank account 40 of each member.

The server management unit 330 may provide and manage usage information capable of using the tokens deposited in the token account of the corresponding member in the token account management unit 310, store and manage data generated in respective processes in conjunction with a cloud system 50, and perform maintenance and management on a platform server.

More specifically, the server management unit 330 may perform comprehensive platform management, such as system control of the platform system 1000 of this example, operation and management, confirmation and check, and update, manage a series of data and information, such as advertisement management, financial assets and business transaction details, commodity details, member management, and advertiser management generated by means of transaction via the corresponding platform, and play a role as a comprehensive control center for data storage management and use via the cloud system 50. Moreover, all data and information generated during execution of the flow of this example can be securely stored in the cloud system 50 by using a blockchain technology.

The electronic commerce intermediary management unit 400 executes the following functions: conducting bidding on a corresponding commodity by taking a plurality of commodity manufacturers as targets when an individual purchases the commodity related to the advertisement video and a plurality of members request a specific commodity, performing intermediary management on electronic commerce for the joint purchase between a commodity manufacturer which has won the bid and the corresponding member, and electronic commerce subscribed, allowing the commodity manufacturer to register the commodity in the joint transaction to the platform, collecting a plurality of members, and performing intermediary management on electronic commerce for the joint transaction. For this purpose, the electronic commerce intermediary management unit 400 may include at least one of an individual transaction management unit 410 and a joint transaction management unit 420.

The individual transaction management unit 410 may provide commodity information related to the advertisement video and provide an electronic commerce intermediary services for purchasing a commodity individually for each member.

As shown in FIG. 5, the individual transaction management unit 410 may include at least one of a commodity detailed information providing unit 411, a commodity purchase determination unit 412, an individual purchase payment settlement unit 413, a commodity purchase processing unit 414, and a call state control unit 415.

The commodity detailed information providing unit 411 may provide commodity detailed information in conjunction with the advertisement video provided for the member communication terminal 10.

More specifically, the commodity detailed information providing unit 411 allows, when a commodity advertisement of interest is present while an advertisement video is received by means of the member communication terminal 10, to confirm all detailed contents of the commodity, after-use evaluations of past users, favorable impression analysis data, recommendations, etc. by clicking or touching an advertisement screen, provide assistance for determining whether to purchase the commodity, and go to a manufacturer homepage 70 as necessary to confirm detailed information of the corresponding manufacturer.

The commodity purchase determination unit 412 may confirm whether or not to purchase the commodity from the member communication terminal 10, perform control to connect telephone communication to the receiver communication terminal 20 based on the telephone number input to the member communication terminal 10 when there is no commodity purchase intention, and perform a commodity purchase procedure when there is a commodity purchase intention.

More specifically, the commodity purchase determination unit 412 may inquire whether or not to purchase a specific commodity from a member who has confirmed the detailed information of the corresponding commodity by means of the commodity detailed information providing unit 411, make a telephone call with the receiver communication terminal 20 if it is confirmed that there is no intention to purchase the commodity, sign a commodity purchase contract (electronic contract) if it is confirmed that there is an intention to purchase the commodity, and immediately transmit purchase determination information to the individual purchase payment settlement unit 413, such that the next process can proceed.

The individual purchase payment settlement unit 413 may withdraw payment corresponding to the commodity purchase procedure performed by the commodity purchase determination unit 412 from the bank account 40 of the member, transfer the payment to a commodity production and delivery manufacturer account, and generate commodity transaction details.

More specifically, the individual purchase payment settlement unit 413 may reconfirm the commodity purchase details and purchase payment of the member received from the commodity purchase determination unit 412, such that the confirmed purchase payment may be transferred from the bank account 40 of the member to a commodity manufacturer 60 that sells the corresponding commodity. In addition, the financial transfer details may be transmitted to the member communication terminal 10 and the server management unit 330, and the commodity transaction details of the member may be transmitted to the commodity purchase processing unit 414, such that the purchased commodity may be delivered to a purchaser.

The commodity purchase processing unit 414 may check the commodity transaction details with the financial transaction details confirmed from the bank account 40 of the member, and request the commodity manufacturer 60 to deliver the commodity settled by the member if there is no abnormality in the check result.

More specifically, after the commodity purchase processing unit 414 accepts the commodity purchase details received from the individual purchase payment settlement unit 413, confirms that the individual transaction of the member communication terminal 10 has been completed, and transmits all data related to the commodity transaction to the server management unit 330, the server management unit 330 may check the bank account 40 of the member with the financial transaction details and commodity purchase details of the corresponding member in the commodity purchase processing unit 414, and when there is no abnormality, the commodity transaction details are transmitted to the commodity manufacturer 60 and the advertiser communication terminal 30, such that the commodity purchased by the member communication terminal 10 can be delivered to the purchaser, and the advertiser can grasp the commodity transaction status by using the advertiser communication terminal 30. In this case, the commodity manufacturer 60 produces and packages the commodity for sale based on the commodity transaction details received from the server management unit 330, and delivers the commodity to a commodity distributor, such that the commodity is delivered to the purchasing member.

The call state control unit 415 may confirm whether there is an intention to call the member communication terminal 10 after the commodity delivery request is completed, and perform control to connect the telephone communication to the receiver communication terminal 20 or terminate the call function according to the confirmation result.

The joint transaction management unit 420 may perform bi-directional joint purchase/subscription of electronic commerce intermediary services: registering commodities needed by members on the platform as commodities to be purchased/subscribed jointly, collecting a plurality of member participants who want to purchase/subscribe the same commodities, conducting bidding on commodities to be purchased/subscribed jointly with a plurality of commodity manufacturers as objects, and providing an electronic commerce intermediary service for the joint purchase between the commodity manufacturer who has won the bid and the corresponding members after the members participating in the joint purchase/subscription select the manufacturer by a majority vote; or, after a manufactured product by which the manufacturer of the commodity intends to conduct a joint transaction with a plurality of purchasers is registered on the platform and members for the joint purchase/subscription are collected, making a plurality of manufacturers participate in bidding for the registered commodity, and after the members participating in joint purchase/subscription select the manufacturer by a majority vote, providing an electronic commerce intermediary service for the joint purchase/subscription between the commodity manufacturer who has won the bid and the corresponding members.

The joint transaction management unit 420 may include at least one of a joint purchase acceptance unit 421, a joint purchase introduction unit 422, a bid participation registration unit 423, a joint purchase selection unit 424, a joint purchase contract signing unit 425, and a joint purchase payment settlement unit 426.

The joint purchase acceptance unit 421 may register information of a commodity to be purchased by the member from the member communication terminal 10, accept a joint purchase/subscription application, or register information of a commodity to be jointly traded from the commodity manufacturer 60, accept a joint purchase/subscription application, publicizes the accepted commodity information and preset joint purchase/subscription conditions within a preset publicity period, collect a plurality of members to perform joint purchase/subscription, make a plurality of commodity manufacturers participate in bidding on the basis of the joint purchase/subscription conditions if the joint purchase/subscription conditions are satisfied within the corresponding publicity period, and cancel the joint purchase/subscription offer if the joint purchase conditions are not satisfied.

More specifically, the joint purchase acceptance unit 421 publicizes and advertises the accepted joint purchase/subscription data within a predetermined period of time, such that a large number of members and commodity manufacturers 60 can perform use and participation. After the publication period ends, the joint purchase/subscription conditions are satisfied or not are determined. If the corresponding conditions are satisfied, the joint purchase details are transmitted to the joint purchase introduction unit 422, such that the joint purchase/subscription process is performed. If the joint purchase/subscription conditions are not satisfied, the member or commodity manufacturer 60 applying for the joint purchase/subscription is notified that the joint purchase/subscription cannot be submitted since the minimum conditions required for the joint purchase/subscription are not satisfied, and the joint purchase/subscription offer is discarded.

The joint purchase introduction unit 422 may introduce the joint purchase/subscription conditions to a plurality of members and commodity manufacturers 60 if the joint purchase acceptance unit 421 determines the bid, where the joint purchase/subscription conditions include the number of joint purchase/subscription participants, commodity information, commodity transaction quantity, commodity reservation unit price, commodity quality standard, commodity delivery schedule, commodity settlement method, purchase quantity in each region, and bidding schedule.

More specifically, the joint purchase introduction unit 422 may introduce the joint purchase/subscription content received from the joint purchase acceptance unit 421 to the member communication terminal 10 scheduled to participate in the joint purchase/subscription and the commodity manufacturer 60 producing the corresponding joint purchase commodity, and push a joint purchase/subscription bid participation invitation, such that the joint purchase/subscription between a consumer and a producer may be performed. In addition, when the joint purchase/subscription content is introduced, the transaction quantity, the predetermined unit price, the quality standard, the delivery schedule, the settlement method, the purchase quantity in each region, and the bidding schedule of the commodity may be introduced, registration of bidding participation may be requested to the bid participation registration unit 423, and data related to bidding may be transmitted to the bid participation registration unit 423.

The bid participation registration unit 423 may register and accept bid registration materials from at least one commodity manufacturer 60 that has confirmed the joint purchase/subscription conditions introduced by the joint purchase introduction unit 422.

More specifically, the bid participation registration unit 423 may confirm the data accepted from the joint purchase introduction unit 422, request and accept materials for determining compliance of the commodity manufacturer 60 participating in the bidding according to a predetermined format, collect materials of the relevant manufacturer by using the artificial intelligence technology on the basis of the accepted data and big data, compare and evaluate the materials, and determine whether or not to finally perform registration. Based on the determination result, the bidding document of the commodity manufacturer 60 determined to be suitable for bidding is accepted, information of the manufacturer participating the bidding and the bidding document submitted by the manufacturer are publicized online, and provided for the member communication terminal 10, such that the participating member can directly confirm the information, and relevant data is transmitted to the joint purchase selection unit 424.

The joint purchase selection unit 424 may provide the bid registration materials accepted by the bid participation registration unit 423 for the member communication terminal 10 participating in the joint purchase, and select the commodity manufacturer to deliver the jointly purchased/subscribed commodity by a voting method of the member communication terminal 10.

More specifically, the joint purchase selection unit 424 may formulate and publish basic specifications for bidding behavior for the members of the member communication terminal 10 and the commodity manufacturers 60 on the basis of the data received from the bid participation registration unit 423, and perform joint purchase/subscription bidding after confirming whether or not to participate finally. After the bidding period ends, the materials related to bid winning are transmitted to the j oint purchase contract signing unit 425.

The joint purchase contract signing unit 425 may sign an electronic contract between the member participating in the joint purchase/subscription and the selected commodity manufacturer to form a community between the member and the commodity manufacturer and provide commodity production and delivery progress information.

More specifically, the joint purchase contract signing unit 425 may receive materials from the joint purchase selection unit 424, sign a contract between the manufacturer winning the bid and the member participating in the j oint purchase/subscription, announce the signing of the contract to the commodity manufacturer 60 winning the bid and the corresponding member communication terminal 10, and transmit an address of the member participating in the joint purchase bidding to the commodity manufacturer 60, such that the purchased commodity can be delivered to the member. In addition, in order to communicate the progress of commodity delivery with the server management unit 330, the server management unit 330 may transmit the status of delivery to the member communication terminal 10, such that the commodity purchaser can confirm the status of delivery. Then, if it is confirmed by means of the member communication terminal 10 that the commodity purchaser has received the commodity, the transaction details may be immediately transmitted, such that the joint purchase payment settlement unit 426 may settle the purchase payment for the commodity.

The joint purchase payment settlement unit 426 may process payment settlement in conjunction with the bank account 40 of the member on the basis of the electronic contract signed by the joint purchase contract signing unit 425. Moreover, data generated by executing all the above-mentioned functions are stored in the cloud system 50 by means of the server data management unit 300, and management and operation are performed.

## Claims

1. An integrated intermediary management platform system for mobile video advertisements, electronic commerce and telephone communication, comprising:
an advertisement push management unit which establishes telephone communication between a member communication terminal and a receiver communication terminal when the member communication terminal refuses to receive an advertisement video provided when telephone communication to the receiver communication terminal is attempted, and pushes the advertisement video to the member communication terminal when reception of the advertisement video is approved;
an advertisement management unit which receives advertisement video registration from an advertiser communication terminal, generates an electronic code according to the registered advertisement video, stores and manages the electronic code together with the advertisement video, filters the advertisement video on the basis of current position information of the member communication terminal, and transmits the filtered advertisement video and the corresponding electronic code to the advertisement push management unit;
a server data management unit which pays tokens to a token account of a member as a reward for reception of the advertisement video pushed to the member communication terminal, maintains balance between the token account and a bank account in conjunction with the bank account of the member, and performs settlement processing by using the bank account of the member when electronic commerce is conducted; and
an electronic commerce intermediary management unit which conducts bidding on a corresponding commodity by taking a plurality of commodity manufacturers as targets when an individual purchases the commodity related to the advertisement video and a plurality of members request a specific commodity, and performs intermediary management on electronic commerce for the joint purchase between a commodity manufacturer which has won the bid and the corresponding member.

2. The integrated intermediary management platform system for mobile video advertisements, electronic commerce and telephone communication according to claim 1, wherein the advertisement push management unit comprises:
a telephone communication reception control unit which transmits a message for confirming whether or not to receive an advertisement to the member communication terminal when input of a telephone number of the receiver communication terminal is confirmed in the member communication terminal, performs control so as to make the receiver communication terminal be connected to telephone communication when the advertisement video is rejected to be received by means of the message, and temporarily determines to place the advertisement when the advertisement video is approved to be received or whether reception is to be approved is not determined within preset time;
an advertisement placement final determination unit which obtains Internet communication environment information of the member communication terminal from the member communication terminal when placement of the advertisement is temporarily determined, interrupts the placement of the advertisement when the placement of the advertisement is in a fee-based Internet communication environment, and finally determines the placement of the advertisement when the placement of the advertisement is in a free Internet communication environment;
a communication terminal position analysis unit which obtains current position information of the member communication terminal from the member communication terminal and transmits the obtained current position information to the advertisement management unit; and
an advertisement video and electronic code pushing unit which receives, from the advertisement management unit, transmission of the advertisement video and the electronic code on the basis of the current position information of the member communication terminal, pushes the received advertisement video to the member communication terminal, and pushes the received electronic code to the server data management unit.

3. The integrated intermediary management platform system for mobile video advertisements, electronic commerce and telephone communication according to claim 2, wherein the advertisement management unit comprises:
an advertisement acceptance unit which accepts the advertisement video and advertiser information from an advertiser communication terminal and charges an advertisement fee determined based on components of the advertisement video;
an advertisement analysis and evaluation unit which performs data analysis on the advertisement video accepted by the advertisement acceptance unit to determine the advertisement fee based on the components of the advertisement video, and classify advertisement video categories, advertisement time, and advertisement areas by using artificial intelligence and big data technologies;
an advertisement video and electronic code management unit which calculates a total number of advertisement pushing times and a token issuing number for the advertisement video classified by the advertisement analysis and evaluation unit, generates an advertisement video electronic code for pushing the advertisement video and a token electronic code for issuing tokens according to the total number of advertisement pushing times, stores the advertisement video electronic code and the token electronic code together with the advertisement video as package information, assigns a unique serial number, and performs storage and management; and
a pushed advertisement analysis unit which pushes an advertisement extraction signal comprising the unique serial number to the advertisement video and electronic code management unit in conjunction with the advertisement analysis and evaluation unit when the communication terminal position analysis unit receives the current position information, extracts the advertisement video matching the corresponding current position information and an advertisement region, and the advertisement video electronic code and token electronic code that match the corresponding advertisement video from the advertisement video and electronic code management unit, and transmit the package information composed of the extracted advertisement video, advertisement video electronic code, and token electronic code to the advertisement video and electronic code pushing unit.

4. The integrated intermediary management platform system for mobile video advertisements, electronic commerce and telephone communication according to claim 3, wherein the advertisement video and electronic code management unit comprises:
an advertisement video storage unit which makes the advertisement video classified by the advertisement analysis and evaluation unit match the advertisement video electronic code and the token electronic code, and performs storage in a mutual linking manner; and
an electronic code generation management unit which calculates the total number of advertisement pushing times and the number of tokens issued for the advertisement video by a method for calculating advertisement fees/token unit prices paid by the advertiser for the advertisement video, stores the advertisement video electronic code, the token electronic code and the unique serial number, extracts the advertisement video consistent with the unique serial number and the advertisement video electronic code and the token electronic code matching the corresponding advertisement video respectively from the advertisement video storage unit if the advertisement extraction signal is received, transmits the extracted package information to the advertisement video and electronic code pushing unit, then deletes respective storage space of the extracted advertisement video, advertisement video electronic code and token electronic code, and counts the remaining advertisement videos, the advertisement video electronic codes and the token electronic codes.

5. The integrated intermediary management platform system for mobile video advertisements, electronic commerce and telephone communication according to claim 4, wherein the server data management unit comprises:
a token account management unit which receives the token electronic code from the advertisement video and electronic code pushing unit and deposits the tokens into the token account of the member, deposits a reward corresponding to the tokens deposited into the token account of the member into the bank account of the member on the basis the advertisement fee charged by the advertisement acceptance unit, and maintains balance between the bank account of the member and the token account of the member;
a token transaction unit which executes token settlement corresponding to an individual purchase and a joint purchase made by means of the electronic commerce intermediary management unit on the basis of the tokens deposited in the token account of the member; and
a server management unit which provides and manages usage information capable of using the tokens deposited in the token account of the member, stores and manages data generated in respective processes in conjunction with a cloud system, and manages system operation, maintenance, and update.

6. The integrated intermediary management platform system for mobile video advertisements, electronic commerce and telephone communication according to claim 1, wherein the electronic commerce intermediary management unit comprises:
an individual transaction management unit which provides commodity information related to the advertisement video and provides an electronic commerce intermediary service for purchasing a commodity individually for each member; and
a joint transaction management unit which receives a joint purchase request for a specific commodity from a plurality of members, collects a plurality of members who are to perform joint purchase, conducts bidding on the commodity as a target of the joint purchase with a plurality of commodity manufacturers as targets, and provides an electronic commerce intermediary service for the joint purchase between the commodity manufacturer which has won the bid and the corresponding member.

7. The integrated intermediary management platform system for mobile video advertisements, electronic commerce and telephone communication according to claim 6, wherein the individual transaction management unit comprises:
a commodity detailed information providing unit which provides commodity detailed information in conjunction with the advertisement video provided for the member communication terminal;
a commodity purchase determination unit which confirms whether or not to purchase the commodity from the member communication terminal on the basis of the commodity detailed information, performs control to connect telephone communication to the receiver communication terminal based on the telephone number input to the member communication terminal when there is no commodity purchase intention, and performs a commodity purchase procedure when there is a commodity purchase intention;
an individual purchase payment settlement unit which transfers payment corresponding to the commodity purchase procedure performed by the commodity purchase determination unit from the bank account of the member and generates commodity transaction details;
a commodity purchase processing unit which checks the commodity transaction details with financial transaction details confirmed from the bank account of the member, and requests the commodity manufacturer to deliver a commodity settled by the member if there is no abnormality in the check result; and
a call state control unit which confirms whether there is an intention to call the member communication terminal after the commodity delivery request is completed, and performs control to connect the telephone communication to the receiver communication terminal or terminate the call function according to the confirmation result.

8. The integrated intermediary management platform system for mobile video advertisements, electronic commerce and telephone communication according to claim 6, wherein the joint transaction management unit comprises:
a joint purchase acceptance unit which registers commodity information to be jointly traded from the member communication terminal and the commodity manufacturer, accepts a joint purchase application, publicizes the accepted commodity information and preset joint purchase conditions within a preset publicity period, collects a plurality of members and commodity manufacturers to perform joint purchase, determines bids to the plurality of commodity manufacturers on the basis of the joint purchase conditions if the joint purchase conditions are satisfied within the corresponding publicity period, and cancels the joint purchase offer if the joint purchase conditions are not satisfied;
a joint purchase introduction unit which introduces the joint purchase conditions to a plurality of commodity manufacturers after the joint purchase acceptance unit determines the bid, wherein the joint purchase conditions comprise the number of joint purchase participants, commodity information, commodity transaction quantity, commodity reservation unit price, commodity quality standard, commodity delivery schedule, commodity settlement method, purchase quantity in each region, and bidding schedule;
a bid participation registration unit which registers and accepts bid registration materials from at least one commodity manufacturer that has confirmed the joint purchase conditions introduced by the joint purchase introduction unit;
a joint purchase selection unit which provides the bid registration materials accepted by the bid participation registration unit for the member communication terminal participating in the joint purchase, and selects the commodity manufacturer to deliver the jointly purchased commodity by a voting method of the member communication terminal;
a joint purchase contract signing unit which signs an electronic contract between the member participating in the joint purchase and the selected commodity manufacturer to form a community between the member and the commodity manufacturer and provide commodity production and delivery progress information; and
a joint purchase payment settlement unit which processes payment settlement in conjunction with the bank account of the member on the basis of the electronic contract signed by the joint purchase contract signing unit.
